# FASCICULE DE BREVET EUROPEEN

(11) **EP 1 278 682 B1**
(45) Date de publication et mention de la délivrance du brevet: **10.11.2004**
(21) Numéro de dépôt: 01917139.6
(22) Date de dépôt: 14.03.2001
(51) Int. Cl.: B65D 77/20

(54) **OPERCULES PREDECOUPES DEPILABLES**
VORGESCHNITTENE ABZIEHBAHRE VERSCHLUSSMEMBRANE
PRECUT FOIL LIDS CAPABLE OF BEING PEELED OFF

(30) Priorité: 17.03.2000 FR 0003444
(43) Date de publication de la demande: 29.01.2003
(73) Titulaire: Pechiney Emballage Flexible Europe, 95200 Rueil Malmaison (FR)
(72) Inventeur: LERDA, Jean-Jacques, F-38850 Bilieu (FR); SWYNGEDAUW, Gilles, 21240 Talant (FR)
(74) Mandataire: Pigasse, Daniel
(86) Numéro de dépôt international: PCT/FR2001/000755
(87) Numéro de publication internationale: WO 2001/068475

(56) Documents cités:
- EP-A- 0 240 626
- WO-A-98/26931
- DE-A- 19 825 777

## Description

### DOMAINE DE L'INVENTION

L'invention concerne le domaine de l'emballage flexible, et plus particulièrement celui des opercules servant à fermer, généralement par thermoscellage, des récipients, des pots, en matière plastique, en carton ou tout autre matériau multicouche, destinés le plus souvent au conditionnement de produits frais, tels que les yaourts, les crèmes fraîches, les flans, glaces, salades, sauces, charcuterie, etc....
L'invention concerne plus spécifiquement les opercules prédécoupés livrés en piles chez le conditionneur de produits alimentaires.

### ETAT DE LA TECHNIQUE

Les opercules prédécoupés de l'état de la technique se présentent sous la forme de piles d'opercules, le fabricant d'opercules livrant au conditionneur de produits alimentaires des piles d'opercules comprenant typiquement 500, 1000 opercules par pile ou même plus.
Ces opercules présentent généralement une face adhésive permettant une fermeture de récipients, typiquement par thermoscellage.
La forme elle-même de l'opercule est définie notamment pas la forme géométrique de l'orifice du récipient à fermer.

Généralement, le conditionneur de produits alimentaires approvisionne son dispositif de conditionnement en opercules en les introduisant sous forme d'une pile dans un magasin dudit dispositif.
Dans l'état de la technique, les opercules sont souvent gaufrés de manière à assurer une dépilabilité correcte, même à grande vitesse, étant donné qu'il est connu qu'une pile d'opercules de surface lisse et sans micro-relief est difficilement dépilable, un opercule ayant tendance à en entraîner un autre, alors que, a contrario, une pile qui présente un micro-relief et qui laisse donc passer l'air entre les opercules, sera aisément dépilable.

On connaît aussi par le brevet français n° 2 731 986 au nom de la demanderesse la possibilité d'obtenir une bonne dépilabilité avec des opercules obtenus après leur dégaufrage partiel, la surface gaufrée pouvant être inférieure à 20 % de la surface de l'opercule, de manière à disposer d'une surface non gaufrée de taille suffisante comme support d'une impression ou d'un décor.
On connaît aussi par la demande européenne EP 883489-A1 la possibilité d'obtenir le micro-relief ou la rugosité de surface souhaitée en utilisant typiquement un revêtement granulaire.

### PROBLEMES POSES

Le problème posé réside dans la double nécessité, d'une part celle de fabriquer de manière économique des opercules présentant une rugosité suffisante pour obtenir une bonne dépilabilité de ces opercules, sans pour autant trop augmenter le poids ou le volume d'une pile d'opercules, et d'autre part d'offrir aux clients conditionneurs des produits différenciés.
En effet, il existe une demande croissante pour des produits différenciés, au-delà du décor extérieur propre à chaque marque, y compris dans le cas des opercules, les conditionneurs souhaitant toujours se démarquer de leurs propres concurrents, et cela, sans que le coût des produits fabriqués aille sensiblement au-delà de celui des produits standard relevant de la production de masse.

### DESCRIPTION DE L'INVENTION

Selon l'invention, les opercules, prédécoupés à partir d'un film multicouche typiquement en bande ou bobine, et destinés à la fermeture étanche par scellage de pots ou récipients, typiquement pour le conditionnement de produits frais, comprennent un substrat doté d'une couche de scellage, typiquement une laque de thermoscellage, éventuellement d'autres couches, notamment une impression sur sa face extérieure, et comprennent un moyen pour obtenir au moins sur une de ses faces une rugosité ou un micro-relief formé d'aspérités de manière à ce que les opercules soient dépilables, et sont caractérisés en ce que les aspérités dudit micro-relief sont formées par ou comprennent un agent gonflant à l'état expansé, de manière à former ledit micro-relief de hauteur moyenne H comprise entre 10 µm et 80 µm.

On appelle « micro-relief » l'ensemble des aspérités ou éléments de relief de la surface intérieure et/ou extérieure des opercules prédécoupés ou du film dans lequel les opercules sont découpés, une aspérité ou un élément de relief étant un relief continu, ininterrompu, un relief « unitaire » en quelque sorte de hauteur moyenne H.

La demanderesse a en effet observé qu'il était possible d'utiliser un agent gonflant pour atteindre simultanément tous les buts de l'invention, à savoir :
- d'une part, former un micro-relief par une disposition prédéterminée d'aspérités sur un opercule, et cela d'une manière typiquement contrôlée, tant en ce qui concerne la hauteur H des aspérités et donc celle dudit micro-relief, qu'en ce qui concerne sa répartition ou densité de surface ou son positionnement à la surface dudit opercule,
- d'autre part, former cette disposition prédéterminée sans avoir à faire appel à des moyens de fabrication spécifiques, en utilisant notamment les procédés et dispositifs couramment utilisés dans le métier de la fabrication des opercules, typiquement les vernisseuses et les imprimeuses,
- en outre, utiliser ledit micro-relief pour différencier visuellement les opercules, comme cela sera expliqué dans ce qui suit,
- enfin, fabriquer ces opercules à des coûts compatibles avec la valeur ajoutée par l'apport d'une différenciation complémentaire.

### DESCRIPTION DES FIGURES

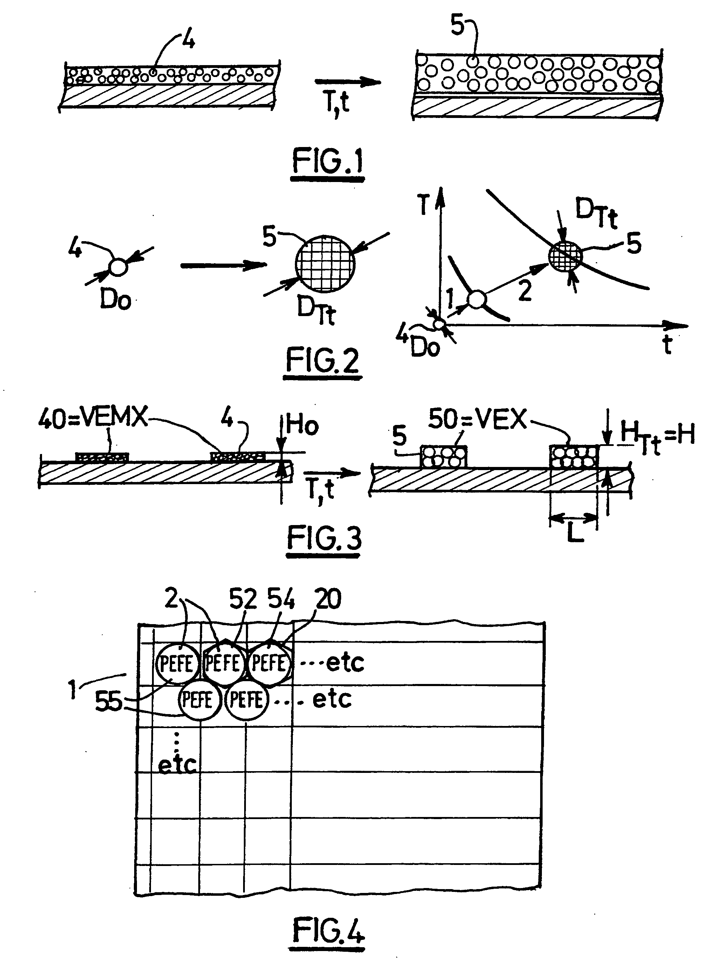

Les figures 1 et 2 schématisent l'expansion d'un agent gonflant, typiquement formé de micro-billes dont le diamètre augmente considérablement après avoir été soumises à un traitement thermique à la température T°C pendant un temps t, micro-billes repérées par (4) avant expansion et par (5) après expansion.
L'agent gonflant inclut également les agents porogènes dont la décomposition thermique conduit à la formation in situ d'un gaz, ce qui entraîne également la formation de micro-billes (5).
La figure 1 schématise en coupe dans le sens vertical une enduction d'une dispersion contenant l'agent gonflant sur un support, avant et après expansion. Plus précisément, sur la figure 1, la partie de gauche représente une enduction (40) d'un vernis ou d'une encre dudit agent gonflant à l'état non expansé, ou VENX en notation abrégée, alors que la partie de droite représente la même enduction (50), après avoir été soumise à un traitement thermique en ayant été à la température T pendant un temps t, l'agent gonflant étant alors passé à l'état expansé, ou VEX en notation abrégée. Comme ces enductions sont continues, il ne se forme pas ou peu de micro-relief au sens de l'invention.

La figure 2 schématise qualitativement l'expansion d'une micro-bille, en fonction de la température T°C et du temps t, dans le cas d'un agent gonflant constitué de micro-billes. Sur le diagramme de droite, on illustre le cas d'un traitement thermique en deux étapes, notées « 1 » et « 2 », avec des courbes dans le plan T-t conduisant à des micro-billes (5) de même diamètre D_{Tt} à l'état expansé en partant de micro-billes (4) de même diamètre D₀.

La figure 3 est analogue à la figure 1, mais correspond à l'invention. Elle schématise, sur la partie gauche de la figure, une enduction ou couche discontinue (40) VENX d'une dispersion contenant l'agent gonflant sur un support avant expansion, et sur la partie droite de la figure, la même enduction (50) VEX, après le traitement thermique - T°C, pendant un temps t - ce qui conduit à une enduction en relief ou couche discontinue VEX faisant apparaître un micro-relief, sous forme d'un trait de largeur L en coupe, et avec des dénivelés de hauteur générique H ou plus précisément H_{Tt} dans la mesure où la hauteur H dépend notamment de la température et de la durée t du traitement thermique d'expansion.

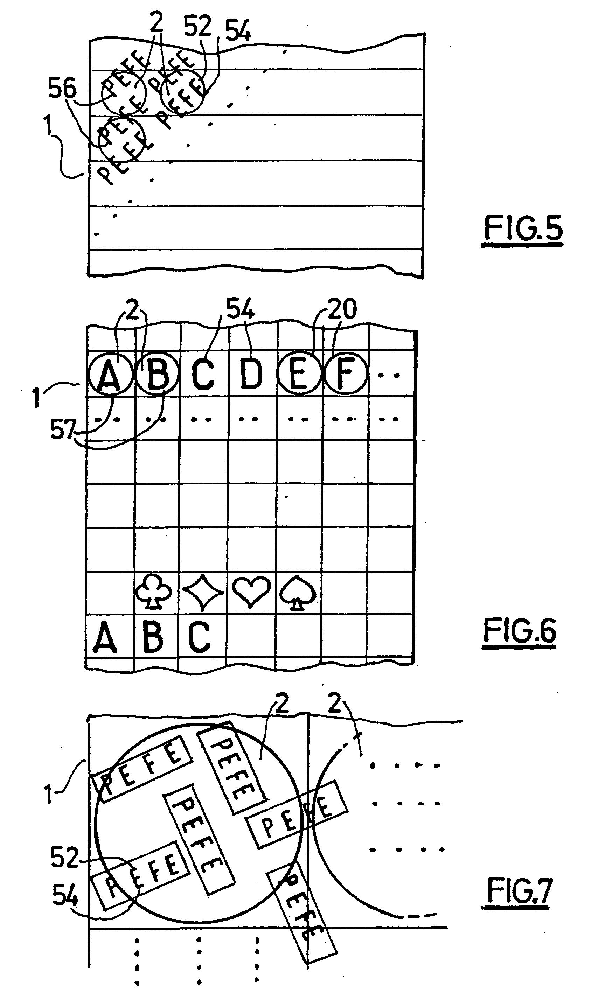

Les figures 4 à 7 représentent, en vue de dessous, des motifs d'impression de la face intérieure de films en bandes (1) dans lesquels seront découpés ultérieurement des opercules (2), motifs d'impression formés par ladite enduction ou couche discontinue VEX. A chaque opercule correspond une « cellule unitaire » (20), ayant la forme d'un carré quand les opercules sont alignés selon des lignes parallèles dans le sens long et travers comme sur la figure 6, ou ayant de préférence la forme d'un hexagone quand les opercules sont disposés selon un empilement hexagonal, un empilement hexagonal compact dans lequel chaque opercule est tangent aux 6 opercules qui l'entourent étant le plus économique pour diminuer les chutes ou pertes en matériau entre opercules.
L'ensemble de ces « cellules unitaires » (20) pave la totalité de la surface de la bande (1).
Ces figures 4 à 7 illustrent quelques possibilités de marquage avec ces motifs d'impression :
- à la figure 4 : chaque cellule unitaire (20) contenant un opercule (2) est hexagonale. Sur chaque opercule (2) est déposée, typiquement par impression, strictement la même enduction en relief (50) représentant un même symbole ou message imprimé (55), formé de traits (52) et de lettres (54), chaque impression (55) formant ledit micro-relief étant repérée par rapport au carré unitaire (20) et ainsi à l'opercule (2) à découper,
- sur la figure 5, le symbole ou message est repéré par rapport à ladite bande (1), mais n'est pas repéré par rapport aux opercules (2) à découper, de sorte que, sur les opercules, sont imprimés des motifs (56) qui peuvent différer d'un opercule à l'autre, de manière plus ou moins aléatoire, et qui peuvent donc être formés sur la zone de scellage périphérique (21). Dans cas, l'encre ou le vernis constituant les motifs imprimés comprend typiquement une laque de thermoscellage.
- sur la figure 6, chaque cellule unitaire (20), en forme de carré, contient un symbole ou message imprimé différent (57), mais de manière prédéterminée, et donc, comme sur la figure 4, chaque impression est repérée par rapport au carré unitaire (20) et ainsi à l'opercule à découper. Sur cette figure, le même symbole revient après 42 carrés unitaires (6 lignes et 7 colonnes), mais cela peut varier notamment avec le diamètre du cylindre d'impression.
- sur la figure 7, on a représenté une cellule unitaire (20), en forme de carré, agrandie avec un autre arrangement de motifs.

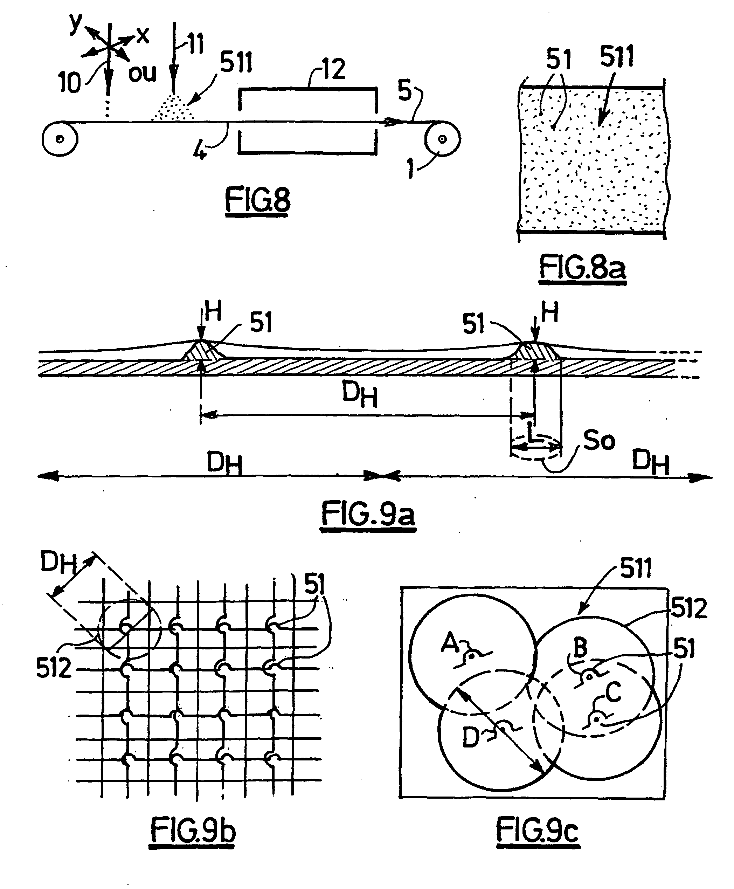

La figure 8 est une représentation schématique en coupe longitudinale dans le plan vertical, de deux autres moyens pour appliquer sur un film en bande une dispersion d'agent gonflant (4), et former avant passage dans un four de séchage ou de cuisson une enduction VENX, et obtenir en sortie de four (12) une enduction VEX :
- soit par un dispositif à jet d'encre (10) que l'on peut diriger dans le plan X-Y de manière à effectuer le dépôt de dispersion selon un motif prédéterminé, à l'aide d'une cinématique tenant compte du déplacement de la bande au cas où l'impression par jet d'encre se ferait sur bande au défilé,
- soit par un dispositif de pulvérisation (11) de ladite dispersion sur la bande de manière à obtenir, suite au dépôt discontinu et aléatoire de minuscules gouttelettes de ladite dispersion, un ensemble d'aspérités ponctuelles (51) formant un motif aléatoire (511), comme schématisé sur la figure 8a.

Les figures 9a à 9e illustrent différents types de micro-reliefs formés à partir d'aspérités ponctuelles (51), ou sous forme de traits (52), en fonction de la densité et de répartition de ces aspérités.
La figure 9a illustre le rapport D_{H}/H entre la distance D_{H} maximale entre deux aspérités (51) dudit micro-relief permettant de conserver une dépilabilité suffisante, appelée aussi diamètre d'influence, et la hauteur H d'une aspérité ponctuelle (51) du micro-relief.
La figure 9b illustre une répartition strictement régulière des aspérités ponctuelles (51), tandis que la figure 9c illustre une répartition aléatoire (511) des aspérités (51).
Ces figures montrent la possibilité de recouvrir toute une surface avec des aspérités réparties aléatoirement ou non, chaque aspérité (51) étendant son effet autour d'elle-même sur un cercle (512) de rayon R_{H} = D_{H}/2, dit rayon d'influence.
La figure 9d illustre une répartition aléatoire (511) des aspérités ponctuelles (51), mais insuffisamment dense pour que leur influence s'étende sur toute la surface sur laquelle ils sont déposés, ce qui conduira à une dépilabilité inférieure à celle schématisée à la figure 9c.
La figure 9e illustre la zone d'influence d'un micro-relief sous la forme d'un segment de courbe AB ou trait (52), la surface d'influence étant alors l'enveloppe (513) des cercles (512), ledit trait (52) pouvant être considéré comme une succession d'aspérités ponctuelles (51).

La figure 10 représente une cellule unitaire (20), en forme de carré, d'un opercule (2) dans lequel le motif d'impression (55) ne recouvre que la partie centrale (22) de la face intérieure de l'opercule, la zone de scellage périphérique (21) comprenant une couche (6) de thermoscellage.

### DESCRIPTION DETAILLEE DE L'INVENTION

Selon l'invention, l'ensemble des aspérités formant ledit micro-relief recouvre une fraction de la face extérieure et/ou de la face intérieure comprise entre 0,1 et 30%.
Généralement, cette fraction, qui correspond donc à un taux de recouvrement de la surface de l'opercule, est comprise entre 1 et 15%.
En effet, comme l'ont montré les études de la demanderesse, et comme cela a été schématisé sur les figures 9a à 9e, il importe pour obtenir une dépilabilité correcte des opercules prédécoupés (2), d'une part, que le micro-relief présente une densité suffisante d'aspérités d'une hauteur H donnée, sachant que cette densité pourra diminuer lorsque la hauteur H augmente. D'autre part, il convient que cette fraction ne soit pas trop élevée, et cela pour deux raisons : il est évident qu'il n'y aurait plus du tout de micro-relief si la fraction était égale à l'unité ou voisine de l'unité, et par ailleurs, compte tenu des coûts de matière, il importe de ne recouvrir que la fraction nécessaire à l'obtention d'une dépilabilité correcte, c'est-à-dire typiquement quand pas plus d'un opercule sur mille est entraîné avec un autre opercule.

Typiquement, ledit micro-relief peut être constitué par une couche discontinue VEX (50) comprenant ledit agent gonflant à l'état expansé (5), typiquement sous forme d'un vernis, encre, peinture ou tout autre formulation applicable sur un support.
Les termes vernis, encres ou peintures font référence à des formulations spécifiques et généralement à des moyens d'applications spécifiques. On parle d'encre plutôt lorsqu'on utilise les techniques d'impression connues et les machines à imprimer correspondantes. On parle de vernis plutôt lorsqu'on utilise des techniques de dépôts de vernis conduisant à des dépôts discontinus, par exemple par pulvérisation, ou éventuellement par sérigraphie, technique qui est une technique d'impression pouvant être aussi utilisée pour effectuer des dépôts repérés de vernis. On parle de peinture si on utilise des techniques de projection des peintures, par exemple par application électrostatique de poudres à l'état divisé.

Selon l'invention, les aspérités de ladite couche discontinue VEX (50) peuvent comprendre typiquement des aspérités ponctuelles isolés (51) et/ou des traits (52) de largeur L typiquement comprise entre 0,5 et 1,5 mm, comme illustré sur la figure 3, et/ou des à-plats, disposés de manière régulière ou aléatoire et formant un motif en relief, comme illustré sur les figures 3 à 9e.

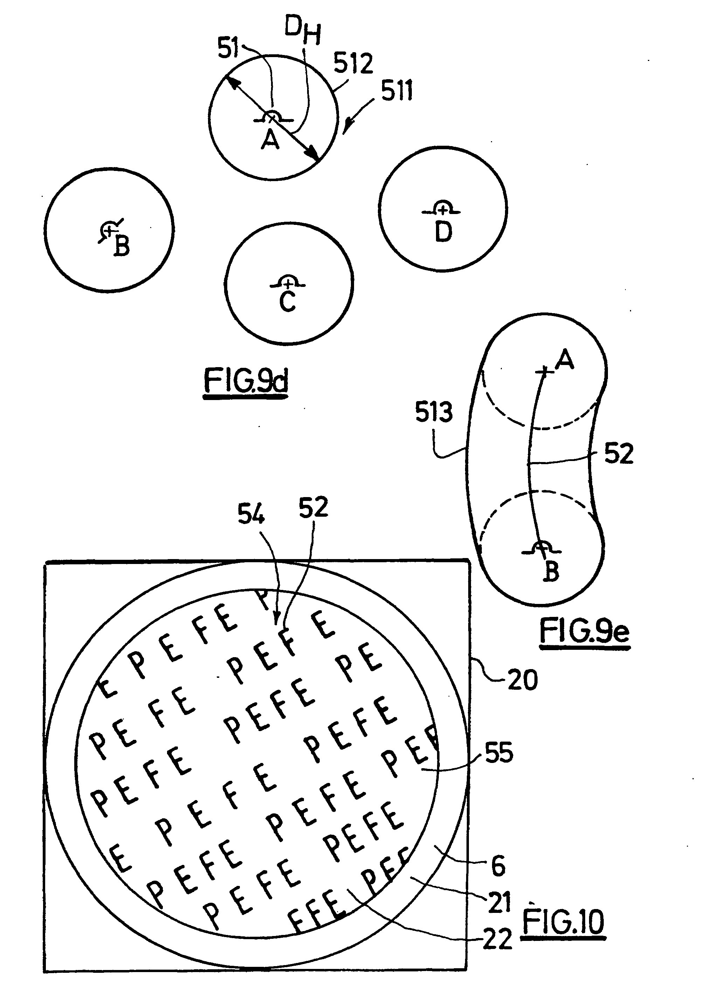

Les figures 9a à 9d illustrent les cas d'aspérités ponctuelles (51), tandis que la figures 9e et les figures 4, 5, 6, 7 et 10 sont relatives à des traits (52), typiquement sous forme de lettres ou de motifs symboliques, qui constituent des motifs d'impression (54, 55, 56, 57).

Selon une modalité de l'invention, ladite couche discontinue VEX (50) peut être formée soit sur la face intérieure dudit substrat (3), soit entre ledit substrat (3) et ladite couche de scellage (6), soit au-dessus de ladite couche de scellage (6), comme illustré dans la structure typique suivante notée par sa succession de couches de l'extérieur vers l'intérieur : VSP / I / Al / TH / VEX repéré, où VSP désigne un vernis de surimpression, I une impresion extérieure, Al le substrat constitué par une feuille d'aluminium et TH un vernis de thermoscellage, la couche discontinue VEX pouvant être repérée, de manière à obtenir, comme illustré sur la figure 10, un opercule dont la partie périphérique est revêtue d'une couche de vernis (6) de thermoscellage TH repérée, alors que la partie centrale est revêtue de ladite couche discontinue VEX (50) également repérée, ou encore de manière à obtenir un opercule revêtu sur toute sa surface d'une couche de vernis (6) de thermoscellage TH non repérée, la couche discontinue VEX restant la même. Dans ces deux cas, ladite couche VEX (50) est formée, de manière repérée, typiquement hors de la partie périphérique des opercules destinée à être scellée. Eventuellement, ladite couche de vernis de thermoscellage (6) pourrait comprendre ledit agent gonflant. En effet, le plus souvent, les micro-billes expansées de l'agent gonflant n'offrent pas une résistance aux mors de scellage telle qu'elles puissent modifier l'étanchéité de la soudure formée par thermoscellage d'un opercule sur un pot généralement thermoformé, le plus souvent en PP, PS.

Selon une autre modalité de l'invention, ladite couche discontinue VEX (50) peut être formée sur ladite face extérieure dudit substrat (3), typiquement sur ladite impression (7), comme dans le cas d'un opercule de structure « VEX / VSP / I / Al / TH », où VSP, I, Al et TH ont la même signification que précédemment.

Selon une autre modalité de l'invention, une couche continue VEX (50), ou VEXC en abrégé, peut être formée sur la face extérieure, une couche discontinue VEX (50) étant formée sur l'autre face, de manière à obtenir un opercule ayant typiquement la structure suivante : VEXC / I /Al /TH / VEX.
En effet, la demanderesse a observé qu'un décor ou qu'une impression recouverte d'une couche continue VEXC conférait à l'impression un aspect satiné et soyeux unique qui ne pouvait pas être obtenu par un autre procédé, ce qu'elle explique en évoquant le cheminement de la lumière à travers la couche VEXC selon des lignes plus ou moins brisées. Compte tenu de son caractère continu, cette couche VEXC ne joue a priori qu'un faible rôle, voire aucun rôle, dans la dépilabilité.

Les constituants de ladite couche discontinue VEX (50) comprenant ledit agent gonflant à l'état expansé (5) sont généralement choisis parmi les produits agréés pour le contact des produits alimentaires, surtout lorsque la couche discontinue VEX (50) est la couche la plus intérieure de l'opercule (2).
De préférence, il en est de même des constituants de la couche continue VEXC dans la mesure où, dans une pile d'opercules, la couche la plus extérieure d'un opercule est en contact avec la couche la plus extérieure de l'opercule voisin dans la pile.
Ladite couche discontinue VEX (50) peut former un motif irrégulier, l'irrégularité du motif étant elle-même soit prédéterminée ou aléatoire, le motif étant, dans ce dernier cas, typiquement constitué par un ensemble aléatoire d'aspérités ponctuelles.
Un motif irrégulier peut être composé d'un ensemble d'aspérités ponctuelles (51) et/ou de traits (52) répartis de manière aléatoire sur ledit support.
L'irrégularité du motif est dite prédéterminée lorsque ce motif irrégulier est formé par une technique d'application ou d'impression qui reproduit un motif préalablement déterminé.
L'irrégularité est dite aléatoire lorsque ce motif irrégulier est formé selon une technique d'application intrinsèquement aléatoire, telle que la pulvérisation par une buse (11) d'une dispersion dudit agent gonflant, comme illustré sur les figures 8 et 8a, ou telle que le transfert électrostatique d'une poudre comprenant ledit agent gonflant. Il est évident que, dans de tels cas, il y a irrégularité locale à l'échelle comprise entre le micromètre et le millimètre, alors qu'il y a une régularité statistique de l'ensemble à l'échelle macroscopique.

Selon une modalité de l'invention, typiquement dans le cas où la couche discontinue VEX (50) est situé sur la face intérieure de l'opercule :
a) ladite couche discontinue VEX (50) formant ledit motif en relief, les dimensions des éléments de relief, typiquement la hauteur H et la largeur L, sont choisies pour assurer un contraste visuel permettant de percevoir visuellement ledit motif, ledit motif étant typiquement choisi pour constituer un élément complémentaire de différenciation et d'identification desdits produits frais conditionnés, ledit motif imprimé pouvant comprendre un élément d'identification tel qu'un élément de décor extérieur, un logo, une marque, un sigle, des chiffre, des lettres ou un texte,
b) la répartition desdits éléments de relief est choisie, notamment l'espacement entre deux éléments de relief voisins, de manière à obtenir une densité d'aspérités qui assure la dépilabilité desdits opercules.

Ainsi, la demanderesse a observé qu'il était possible d'utiliser ladite couche discontinue VEX (50) pour former un motif d'impression qui puisse à la fois présenter un contraste visuel et qui résolve simultanément le problème de la dépilabilité.
Un même objet, la couche discontinue VEX (50), peut donc servir à deux fins : d'une part, assurer d'abord la dépilabilité des opercules prédécoupés, et en outre, constituer un motif d'impression « secondaire », sur la face intérieure, venant en complément de l'impression I habituelle, sur la face extérieure de l'opercule (2), ce motif d'impression « secondaire » n'étant vu par le consommateur que lors de l'ouverture du récipient fermé par ledit opercule.

De préférence, en vue d'augmenter ledit contraste visuel, ladite couche discontinue VEX (50) peut comprendre une matière colorante assurant ledit contraste, de préférence agréé pour le contact alimentaire, telle que, typiquement, un pigment blanc si la partie restante dudit opercule non recouverte par ledit motif est colorée ou de ton foncé, ou un pigment noir si cette partie restante est blanche ou de ton clair, et dans lesquels ledit motif en relief assurant ledit contraste visuel est un motif imprimé (52,54,55,56,57).

Ledit motif d'impression peut être un motif d'impression identique (55) pour tous les opercules, comme illustré sur la figure 4 ou sur la figure 10, ou être un motif d'impression différent (56,57) d'un opercule à l'autre, ce motif (56,57) comprenant au moins une partie variable d'un opercule à l'autre, sous forme de caractères, typiquement des chiffres, des lettres ou des symboles unitaires, présentant une taille et un pas choisis pour obtenir ladite densité d'aspérités suffisante, de manière à ce que ce moyen de différenciation d'un opercule par rapport à un autre puisse être utilisé pour un jeu ou une loterie, ce moyen de différenciation pouvant se trouve sur la face extérieure de l'opercule, visible, ou sur la face intérieure de l'opercule, visible seulement lors d'une première ouverture desdits pots ou récipients.

Selon la figure 5, le motif d'impression (56) est repéré par rapport au film (1) lui-même, alors que, sur les figures 4, 6 et 10, le motif d'impression (57) est repéré par rapport à l'opercule (2) lui-même.
Dans ce dernier cas, la couche VEX (50) peut être formée, de manière repérée par rapport à l'impression (7), typiquement hors de la zone périphérique de scellage (21), comme illustré sur la figure 10.
La couche VEX (50) peut aussi comprendre une laque de thermoscellage et être formée de manière non repérée par rapport à l'impression (7), y compris dans la zone périphérique de scellage (21).
La couche discontinue VEX (50) peut ainsi être appliquée et répartie, de manière aléatoire ou régulière ou repérée, selon l'objectif recherché et la technique de dépôt utilisée.
Un dépôt ou une répartition aléatoire (511) d'aspérités ponctuelles (51) formant la couche discontinue VEX (50) peut être obtenue, comme illustré sur la figure 8a, par exemple par un dispositif (11) d'application par pulvérisation illustré à la figure 8, alors qu'une répartition régulière d'aspérités ponctuelles pourra être obtenue avec le dispositif (10) d'application par jet d'encre dirigé.
La formation de traits (52) en vue d'imprimer des caractères ou des symboles, relève des techniques habituelles d'impression de films de grande largeur qui utilisent des cylindres, que ce soit en sérigraphie, en héliogravure, en offset ou en flexographie, reproduisant à chaque tour le même cliché sur la bande à imprimer.
Que l'impression soit faite par jet d'encre, par cylindre d'impression, ou tout autre technique connue de reprographie ou de transfert de matière, l'invention rend donc possible l'impression d'un motif spécifique avec une fréquence prédéterminée.
Il est également possible de superposer plusieurs techniques, en particulier à l'aide d'une technique de marquage, par exemple par jet d'encre, se superposant, à une fréquence faible prédéterminée (pour marquer par exemple 1 opercule sur 10⁶), à la technique d'impression ou d'application habituelle, de manière à constituer ainsi les bases possibles pour un jeu avec des lots importants associés à une faible probabilité pour le consommateur final de tomber sur ledit motif spécifique.

Ainsi, ladite surface intérieure peut comprendre un moyen assurant la dépilabilité de l'opercule et formant simultanément un élément complémentaire de différenciation et d'identification desdits produits frais conditionnés, notamment d'une marque desdits produits frais conditionnés, et également un moyen de différenciation d'un opercule par rapport à un autre apte à être utilisé pour un jeu ou une loterie. En effet, la vente des produits de grande consommation fait très souvent appel à la nature joueuse des consommateurs, et il est donc important pour le fabricant d'emballages d'offrir au conditionneur des éléments d'emballage permettant éventuellement de satisfaire ce besoin, sans coût additionnel.
A titre d'exemples, on peut citer comme possibilités de jeu ou loterie :
- d'une part, même avec les systèmes d'impression traditionnels, il est possible, avec des laizes de plus d'un mètre, de ne revenir au motif de départ qu'après 200 motifs différents, ce qui est déjà un nombre assez élevé pour pouvoir organiser une jeu.
- d'autre part, il est possible d'introduire au moins un second système de marquage, aléatoire par rapport au premier, de manière à avoir des opercules portant typiquement de deux à quatre signes différents, représentant une sélection aléatoire de quatre signes, par exemple quatre nombres de 1 à 100, quatre cartes de 1 à 52, deux signes du zodiaque plus deux nombres, etc....

Quelle que soit la modalité de l'invention, la hauteur H desdites aspérités (51) ou des traits (52) ou des motifs imprimés (54,55,56,57), ladite fraction, et la répartition desdites aspérités (51) ou des traits (52) ou desdits motifs (54, 55, 56,57) à la surface des opercules sont choisis de manière à ce que les opercules (2), compte tenu du micro-relief formé par lesdites aspérités ou lesdits motifs, soient dépilables, et forment en outre des piles droites, chaque opercule (2) restant dans un plan sensiblement horizontal.
En effet, il convient selon l'invention que la pile d'opercules, d'une part soit dépilable, et d'autre part reste verticale, en jouant sur la hauteur du micro-relief et sur la répartition ou densité d'implantation des aspérités (51) ou traits (52) ou à-plats à la surface de l'opercule (2).

Typiquement, ce micro-relief présente une hauteur H, ou dénivelé entre sommet et plaine, allant de 10 à 80 µm, comme déjà indiqué. 14. De préférence, ledit micro-relief présente une hauteur moyenne H compris entre 15 µm et 60 µm.
Comme illustré aux figures 9a à 9d, la dépilabilité peut faire aussi intervenir la notion de répartition ou de densité d'implantation des aspérités ponctuelles (51) ou des traits (52) formant des lettres, des chiffres ou des symboles (54).
Suite aux essais qu'elle a effectués, la demanderesse a trouvé un lien entre la hauteur H et la notion de répartition ou de densité, en introduisant la notion de rayon R_{H} ou diamètre D_{H} d'influence d'une aspérité ponctuelle (51), comme illustrés aux figures 9c et 9d, ou d'un trait (52), comme illustré à la figure 9e.
Ainsi, elle a observé qu'une densité trop faible de micro-reliefs, comme illustré à la figure 9d, conduisait une dépilabilité inférieure à celle obtenue avec une densité telle que celle illustrée à la figure 9c.
En essayant de quantifier ces notions, elle a trouvé qu'il était préférable d'avoir le rapport D_{H}/ H compris entre 100 et 3000, et typiquement entre 200 et 1000.
Par contre, une trop grande densité de micro-reliefs conduit à un surcoût et une augmentation de poids inutiles et à un mauvais dépilage chez le client.

Le substrat (3) des opercules selon l'invention peut être choisi parmi les matériaux en feuilles ou en bandes suivants :
a) feuille d'aluminium d'épaisseur comprise entre 5 µm et 100 µm,
b) film plastique à base de PET métallisé ou non d'épaisseur comprise 8 µm et 500 µm,
c) film plastique, typiquement le PP, l'OPP, le PS, l'OPS, métallisé ou non, d'épaisseur comprise entre 10 µm et 500 µm,
d) film multicouche comprenant au moins deux couches d'un ou de plusieurs des matériaux précédents a) à c), éventuellement liées entre elles par une couche adhésive,
e) films multicouche comprenant une couche de papier et un film précédent a) à d).

Selon l'invention, ladite couche discontinue VEX (50) peut comprendre un agent glissant à une teneur pondérale comprise entre 1 et 30% en poids et de préférence comprise entre 5 et 15% en poids. Cet agent glissant peut être de la silice micronisée.

Un autre objet de l'invention est un procédé de fabrication d'opercules selon l'invention, procédé dans lequel :
a) on approvisionne ledit substrat S en bande ou en feuille (3), ladite laque de thermoscellage (6), ainsi que l'agent gonflant à l'état non expansé (4),
b) on forme une dispersion dudit agent gonflant (4), typiquement un vernis ou une encre, comprenant éventuellement un composé de thermoscellage,
c) on applique, avec un grammage choisi et de manière repérée ou non, ladite dispersion sur ledit substrat ou éventuellement sur ledit substrat préalablement revêtu d'une ou plusieurs autres couches complémentaires, typiquement une couche de thermoscellage TH, une impression I, une couche de vernis de surimpression VSP, de manière à obtenir un film multicouche intermédiaire,
d) on porte éventuellement ledit film multicouche intermédiaire à une température donnée et on le maintient à cette température pendant un temps donné choisis pour réaliser tout ou partie de l'expansion dudit agent gonflant et ainsi obtenir tout ou partie de la hauteur prédéterminée dudit micro-relief, ces conditions de température et de temps permettant typiquement le séchage dudit film multicouche intermédiaire.
e) selon le cas, on applique lesdites couches complémentaires ou éventuellement d'autres couches, et le cas échéant, on les sèche dans des conditions de température et de temps qui permettent d'obtenir ladite couche VEX formant ledit micro-relief de hauteur moyenne H prédéterminée, de manière à pouvoir supprimer tout ou partie de l'étape d) précédente.
En effet, il peut être avantageux de ne soumettre ledit substrat qu'à un seul traitement thermique, typiquement de séchage, et d'utiliser un traitement de séchage nécessaire même en l'absence d'agent gonflant, pour effectuer le traitement thermique destiné à réaliser l'expansion de l'agent gonflant.
Naturellement, il faut tenir compte du substrat et de sa tenue en température pour déterminer les conditions de température T et de temps t adaptées pour réaliser ladite expansion, comme représenté à la figure 2.
Généralement, on forme à part la dispersion de l'agent gonflant, mais il est également possible, de former ladite dispersion in situ, en projetant ledit agent gonflant directement sur un revêtement encore liquide et fluide recouvrant ledit substrat, puis de traiter thermiquement l'ensemble, pour à la fois réaliser son expansion et éliminer le solvant du revêtement à l'état liquide et fluide.

La dispersion dudit agent gonflant peut être sous forme liquide ou sous forme de poudre en fonction du procédé d'application. En effet, si la formulation de ladite dispersion s'apparente à celle d'un vernis ou d'une encre, elle sera sous forme liquide, alors que si elle s'apparente à une peinture, elle sera soit sous forme liquide soit sous forme de poudre, l'application d'une dispersion en poudre contenant ledit agent gonflant, typiquement par un procédé électrostatique étant possible selon l'invention.

Ledit agent gonflant peut être formé de micro-billes de diamètre moyen, à l'état non expansé, inférieur à 20 µm et typiquement inférieur à 15 µm et de pouvoir d'expansion typiquement au moins égal à 2, et typiquement compris entre 2 et 5.
Typiquement, le diamètre des micro-billes est inférieur à 10 µm. En effet, il doit être assez petit pour qu'on puisse former une dispersion, stable de préférence, typiquement une encre, ou une peinture, et qu'il soit applicable notamment avec les techniques d'impression habituelles.
Comme agent gonflant sous forme de micro-billes, on peut choisir typiquement un produit de la gamme Expancel ® d'Akzo Nobel.
Ledit agent gonflant peut également être un agent porogène, typiquement de l'azobisdicarbonamide, choisi par exemple parmi les produits de la gamme Porofor ®. Ces agents porogènes se décomposent thermiquement à une température allant de 140°C à 230°C, un gramme d'un agent porogène conduisant à plus de 200 cm³ de gaz.

D'une manière générale, pour un substrat donné, et compte tenu des conditions d'application dudit agent gonflant, notamment sa température et sa durée d'expansion, on choisit l'extrait sec de ladite dispersion ainsi que le grammage d'agent gonflant à appliquer de manière à obtenir une hauteur de micro-relief comprise entre 10 et 80 µm, et de préférence comprise entre 15 et 60 µm.

Compte tenu des travaux de la demanderesse, on choisit la répartition ou distribution dudit agent gonflant de manière à ce que la consommation en agent gonflant soit la plus faible possible, typiquement par un arrangement, régulier ou non, d'aspérités (51) de hauteur H et de surface Sₒ typiquement comprise entre 0,1 et 10 mm², distantes entre elles d'une longueur moyenne D_{H} variant en première approximation comme k.(H-H₀) où H₀ représente la hauteur minimum des aspérités pour laquelle apparaît un effet positif desdites aspérités sur la dépilabilité, typiquement de l'ordre de 10µm, et où k est une constante de proportionnalité de valeur comprise typiquement entre 30 et 300 selon le type d'opercule. Les figures 9a à 9d illustrent ces notions dans le cas d'aspérités ponctuelles (51), alors que la figure 9e illustre la même notion dans le cas d'un trait (52).

Selon l'invention, on peut appliquer ladite dispersion en la projetant à l'état dispersé ou divisé sur ledit substrat, de manière à obtenir un micro-relief à répartition aléatoire (511), typiquement formé par un grand nombre d'aspérités ponctuelles (51) distribuées au hasard, comme illustré avec le dispositif (11) représentant une buse projetant sur le substrat la dispersion de l'agent gonflant à l'état divisé, de manière à obtenir un motif aléatoire (511).

Selon l'invention, on peut appliquer ladite dispersion par tout procédé d'impression ou de reprographie permettant de former un motif prédéterminé (52,54,55,56,57), typiquement choisi parmi les procédés de sérigraphie, offset, flexographie, héliogravure, impression par jet d'encre, par transfert, ou par un procédé de reprographie ou d'impression numérique. Les motifs obtenus aux figures 4, 5, 6, 7, 9b, 9e, 10 sont obtenus à partir de clichés ou d'images numérisées et reproduits sur ledit support par les procédés connus.

Avec le procédé selon l'invention, on peut fabriquer de la bande (1) pour opercules prédécoupées présentant typiquement une des structures suivantes, notées symboliquement, de l'extérieur vers l'intérieur :
1) VSP/ I / Al / TH / VEX , où Al désigne une feuille d'aluminium formant le substrat S
2) VSP / I / PET / TH / VEX, où PET désigne un film de polyester formant le substrat S
3) VEX / VSP / I / Al / TH,
4) VEX / VSP / I / PET / TH,
5) VSP/ I / VAc / Al / TH / VEX , où VAc désigne un vernis d'accrochage
6) VEX /VSP/ I/ VAc / Al / TH,
7) les structures précédentes 1) à 6) avec la couche de vernis de thermoscellage TH repérée par rapport à l'impression I, de manière à avoir une couche TH sur la bande périphérique de scellage et une couche VEX dans la plage centrale délimitée par ladite bande périphérique,
8) les structures 1), 2) et 5) précédentes avec une couche VEX non repérée par rapport à l'impression I, la couche VEX comprenant une laque de thermoscellage, la couche de vernis de thermoscellage TH pouvant être repérée ou non par rapport à l'impression I.
9) les structures 1), 2) et 5) précédentes dans lesquelles les couches TH/VEX sont remplacées par une couche unique TH+VEX.
10) les structures 1) et 2) précédentes dans lesquelles la couche VSP est remplacée par une couche VEX continue ou VEXC, de manière à modifier l'apparence de l'impression I.

Un autre objet de l'invention réside dans l'utilisation d'un agent gonflant à l'état expansé pour former le micro-relief à la surface d'opercules selon l'invention, afin d'améliorer leur dépilabilité, et/ou pour modifier l'aspect de l'impression I, et typiquement, dans l'utilisation comme agent gonflant de micro-billes expansibles par un apport énergétique, typiquement un apport de chaleur, cet apport de chaleur étant de préférence effectué lors d'une étape obligée de la fabrication des opercules, notamment une étape de séchage d'encres ou de vernis formant une couche des opercules.

### EXEMPLES DE REALISATION

Tous les essais ont été réalisés à partir d'une feuille d'aluminium Al de 38 µm d'épaisseur, choisi comme substrat (3).

On a approvisionné une laque de thermoscellage du commerce TH à base de résine vinylique-acrylique et un vernis VE du commerce à base d'une même résine vinylique-acrylique.
Comme agent gonflant, on a approvisionné des produits Expancel ® fournis par la Société Akzo Nobel et plus spécifiquement, le produit de la série DU dont le diamètre moyen des billes avant expansion est 9 µm.
On a formé des dispersions VEX de l'agent gonflant X dans le vernis VE, à des teneurs de 10 - 20 - 30 et 40 % (en poids). Puis on a fabriqué, de manière connue en elle-même, les matériaux multicouche suivants, I désignant une impression et VSP un vernis de surimpression du commerce, avec de l'extérieur vers l'intérieur :
a) VSP / I / Al / TH / VEX repéré
b) VSP / I / PET / TH / VEX repéré
c) VEX / VSP / I / Al / TH
d) VEX / VSP / I /PET / TH
e) VSP / I / Al / TH / VEX thermoscellant non repéré
Dans les cas a) et b), l'application de VEX est repérée par rapport à l'impression I du décor, de manière à ne pas masquer la couche TH de vernis de thermoscellage sur le pourtour de l'opercule destiné à être thermoscellé.
Dans le cas c) on a aussi fabriqué une variante en appliquant une laque de pré-impression sur la face extérieure de Al avant impression.
Dans les cas c) à e), l'application de VEX n'est pas repérée, le vernis VEX étant par lui-même thermoscellant dans le cas e), de manière à ne pas diminuer la qualité du scellage quand du vernis VEX est déposé sur la zone périphérique de scellage (21).

En ce qui concerne l'ordre des opérations, on peut appliquer le VEX soit avant l'impression, soit après, et typiquement en dernière passe de fabrication : dans ce dernier cas, on maîtrise mieux les conditions d'expansion de l'agent gonflant X. En effet, dans le premier cas, chaque étape de séchage, notamment de séchage des encres de l'impression I, constitue un apport énergétique et thermique qui contribue au gonflement de l'agent gonflant.

Naturellement, le gonflement de l'agent gonflant X se confond au moins en partie avec le séchage du vernis ou de l'encre VEX.
Dans ces essais, on a fait varier les conditions de temps (typiquement de 10s à 5 min dans un four à passage fonctionnant en continu) et de température (typiquement de 60 à 150°C et généralement à 100°C), de manière à faire passer le diamètre moyen de l'agent gonflant X de 10 µm au moment de l'application du vernis VEX, à environ 30µm, 50 µm et 70µm après l'étape d'expansion de l'agent gonflant.
On a également fait des essais avec un vernis VEX coloré par 1% en poids de pigment blanc à base d'oxyde de titane : on a obtenu ainsi un contraste visuel suffisant pour rendre parfaitement lisible en formant des caractères ou des signes tels que ceux représentés sur les figures 4 à 7 et 10.

On a aussi étudié l'influence de la densité de micro-reliefs sur la dépilabilité des opercules en formant par impression des micro-reliefs de 0,5 mm de diamètre et 50 µm de hauteur comme représenté sur la figure 9b. On a observé que la dépilabilité diminuait quand cette densité devenait trop basse (micro-reliefs distants typiquement de 20 mm ou plus) ou trop haute (micro-reliefs distants typiquement de 0,5 mm ou moins).
En première approximation, il semble que la dépilabilité des opercules suppose à la fois la présence de micro-reliefs sur les opercules, et cela avec une certaine densité, comme représenté schématiquement sur les figures 9a, 9b, 9c et 9d.
La figure 9a illustre le fait que chaque micro-relief de hauteur H, assimilé sinon à un point, du moins à une zone de petit diamètre, étend son influence, en ce qui concerne la dépilabilité, autour de lui sur un cercle de diamètre D_{H}.
Il semble qu'une bonne dépilabilité suppose, comme représenté sur la figure 9c, que l'ensemble de ces cercles se recoupent en partie pour recouvrir l'ensemble de la surface de l'opercule.
Dans le cas contraire, comme représenté sur la figure 9d, la dépilabilité est moins bonne parce que la densité de micro-reliefs est insuffisante.
La figure 9e illustre schématiquement la zone d'influence d'un trait de faible largeur et de même hauteur H, c'est ce qui explique sans doute la possibilité d'obtenir des opercules dépilables avec des motifs imprimés comme illustré sur les figures 4, 5, 6 et 7.

On a également réalisé des essais en remplaçant l'Expancel ® par un Porofor ADC ® à base d'azobisdicarbonamide de la Société Bayer, et on a obtenu des résultats analogues.

Pour augmenter ou pour contrôler le glissement des opercules, on a également fait des essais en incorporant, en plus de l'agent gonflant, 10% en poids de silice micronisée.

### AVANTAGES DE L'INVENTION

L'invention présente de nombreux avantages dans la mesure où elle permet, outre de résoudre la problème de la dépilabilité :
- d'une part, de s'adapter aux techniques de production habituelles, et cela sans modifications notables des méthodes de fabrication, de manière à n'entraîner qu'un faible surcoût de production,
- d'autre part, de divulguer des moyens génériques qui peuvent être facilement adaptés à la production d'opercules individualisés,
- en outre, de proposer des opercules incorporant, sans surcoût, des possibilités de différentiation qui peuvent le support de jeux, particulièrement prisés dans le domaine de la grande consommation,
- enfin, de fournir un moyen pour modifier l'apparence de l'impression I formant le décor extérieur.

### LISTE DES REPERES

| | |
|---|---|
| Bande / matériau multicouche en bande | 1 |
| Opercule ou portion de bande relative à un opercule | 2 |
| Carrés unitaires / cellules de pavage | 20 |
| Zone périphérique de scellage d'un opercule | 21 |
| Partie centrale d'un opercule | 22 |
| Substrat | 3 |
| Agent gonflant à l'état non expansé AGENE ou micro-bille | 4 |
| Agent gonflant à l'état expansé AGEE ou micro-bille | 5 |
| Enduction / Couche vernis/encre + AGENE = VENX | 40 |
| Enduction / Couche de vernis/encre +AGEE = VEX | 50 |
| Aspérité ponctuelle (circulaire) | 51 |
| Motif avec disposition régulière | 510 |
| Motif avec disposition aléatoire | 511 |
| Cercle d'influence d'une aspérité | 512 |
| Enveloppe de cercles d'influence | 513 |
| Motif imprimé avec traits | 52 |
| Motif imprimé avec symbole, lettre, chiffre | 54 |
| Motifs identiques pour tous les opercules | 55 |
| Motifs différents d'un opercule à l'autre - aléatoires | 56 |
| Motifs différents d'un opercule à l'autre - non aléatoires | 57 |
| Couche de scellage | 6 |
| Impression (décor) | 7 |
| Vernis de surimpression | 8 |
| Couche d'accrochage | 9 |
| Dispositif d'application du VENX par jet dirigé | 10 |
| Dispositif d'application du VENX par pulvérisation | 11 |
| Four de séchage et expansion | 12 |

## Revendications

1. Opercules (2), prédécoupés à partir d'un film multicouche (1) notamment en bande ou bobine, et destinés à la fermeture étanche par scellage de pots ou récipients, en particulier pour le conditionnement de produits frais, comprenant un substrat (3) doté d'une couche de scellage, par exemple constituée d'une laque de thermoscellage (6), éventuellement d'autres couches, notamment une impression (7) sur sa face extérieure, et comprenant un moyen pour obtenir au moins sur une de ses faces une rugosité apte à rendre dépilables lesdits opercules, **caractérisés en ce que** ledit moyen est constitué par un micro-relief formé par des aspérités (51,52,54,55,56,57), lesdites aspérités étant formées par ou comprenant un agent gonflant à l'état expansé (5), de manière à former ledit micro-relief de hauteur moyenne H comprise entre 10 µm et 80 µm.

2. Opercules selon la revendication 1 dans lesquels l'ensemble des aspérités formant ledit micro-relief recouvre une fraction de la face extérieure et/ou de la face intérieure comprise entre 0,1 et 30%.

3. Opercules selon la revendication 2 dans lesquels ladite fraction est comprise entre 1 et 15%.

4. Opercules selon une quelconque des revendications 1 à 3 dans lesquels ledit micro-relief est constitué par une couche discontinue VEX (50) d'un vernis ou d'une encre comprenant ledit agent gonflant à l'état expansé (5).

5. Opercules selon la revendication 4 dans lesquels les aspérités de ladite couche discontinue VEX (50) comprennent typiquement des aspérités ponctuelles isolés (51) et/ou des traits (52), de largeur L, et/ou des à-plats, disposés de manière régulière ou aléatoire, cet ensemble d'éléments de relief formant un motif en relief.

6. Opercules selon la revendication 5 dans lesquels ladite couche discontinue VEX (50) est formée soit sur la face intérieure dudit substrat (3), soit entre ledit substrat (3) et ladite couche de scellage (6), soit au-dessus de ladite couche de scellage (6), une couche continue VEXC pouvant être éventuellement formée sur la face extérieure.

7. Opercules selon la revendication 5 dans lesquels ladite couche discontinue VEX (50) est formée sur ladite face extérieure dudit substrat (3), typiquement sur ladite impression (7).

8. Opercules selon une quelconque des revendications 5 à 7 dans lesquels les constituants de ladite couche discontinue VEX (50) comprenant ledit agent gonflant à l'état expansé (5) sont choisis parmi les produits agréés pour le contact des produits alimentaires.

9. Opercules selon une quelconque des revendications 5 à 8 dans lesquels ladite couche discontinue VEX (50) forme un motif irrégulier, l'irrégularité du motif étant soit prédéterminée ou aléatoire, et dans ce cas constitué typiquement par un ensemble aléatoire d'aspérités ponctuelles.

10. Opercules selon une quelconque des revendication 5 à 8 dans lesquels :
a) ladite couche discontinue VEX (50) forme un motif en relief, les dimensions des éléments de relief, typiquement la hauteur H et la largeur L, étant choisies pour assurer un contraste visuel permettant de percevoir visuellement ledit motif, ledit motif étant typiquement choisi pour constituer un élément complémentaire de différenciation et d'identification desdits produits frais conditionnés, ledit motif imprimé pouvant comprendre un élément d'identification tel qu'un élément de décor extérieur, un logo, une marque, un sigle, des chiffre, des lettres ou un texte,
b) la répartition desdits éléments de relief est choisie, notamment l'espacement entre deux éléments de relief voisins, de manière à obtenir une densité d'aspérités qui assure la dépilabilité desdits opercules.

11. Opercules selon la revendication 10 dans lesquels ladite couche discontinue VEX (50) comprend une matière colorante assurant ledit contraste, de préférence agréé pour le contact alimentaire, telle que, typiquement, un pigment blanc si la partie restante dudit opercule non recouverte par ledit motif est colorée ou de ton foncé, ou un pigment noir si cette partie restante est blanche ou de ton clair, et dans lesquels ledit motif en relief assurant ledit contraste visuel est un motif imprimé (52,54,55,56,57).

12. Opercules selon une quelconque des revendications 10 à 11 dans lesquels ledit motif imprimé est un motif d'impression identique (55) pour tous les opercules ou un motif d'impression différent (56,57) d'un opercule à l'autre, ce motif (56,57) comprenant au moins une partie variable d'un opercule à l'autre, sous forme de caractères, typiquement des chiffres, des lettres ou des symboles unitaires, présentant une taille et un pas choisis pour obtenir ladite densité d'aspérités suffisante, de manière à ce que ce moyen de différenciation d'un opercule par rapport à un autre puisse être utilisé pour un jeu ou une loterie, ce moyen de différenciation pouvant se trouve sur la face extérieure de l'opercule, visible, ou sur la face intérieure de l'opercule, visible seulement lors d'une première ouverture desdits pots ou récipients.

13. Opercules selon une quelconque des revendications 2 à 12 dans lesquels la hauteur H desdites aspérités (51) ou des traits (52) ou des motifs imprimés (54,55,56,57), ladite fraction, et la répartition desdites aspérités ou traits ou motifs à la surface des opercules sont choisis de manière à ce que les opercules (2), compte tenu du micro-relief formé par lesdites aspérités ou lesdits motifs, soient dépilables, et forment des piles droites, chaque opercule (2) restant dans un plan sensiblement horizontal.

14. Opercules selon une quelconque des revendications 1 à 13 dans lesquels ledit substrat (3) est choisi parmi les matériaux en feuilles ou en bandes suivants :
a) feuille d'aluminium d'épaisseur comprise entre 5 µm et 100 µm,
b) film plastique à base de PET métallisé ou non d'épaisseur comprise 8 µm et 500 µm,
c) film plastique, typiquement le PP, l'OPP, le PS, l'OPS, métallisé ou non, d'épaisseur comprise entre 10 µm et 500 µm,
d) film multicouche comprenant au moins deux couches d'un ou de plusieurs des matériaux précédents a) à c), éventuellement liées entre elles par une couche adhésive,
e) films multicouche comprenant une couche de papier et un film précédent a) à d).

15. Opercules selon une quelconque des revendications 4 à 14 dans lesquels ladite couche VEX (50) est formée de manière repérée par rapport à l'impression (7), typiquement hors de la zone périphérique (21) des opercules destinée à être scellée.

16. Opercules selon une quelconque des revendications 4 à 14 dans lesquels ladite couche VEX (50) comprend une laque de thermoscellage et est formée de manière non repérée par rapport à l'impression (7), y compris dans la zone périphérique (21) de scellage des opercules.

17. Opercules selon une quelconque des revendications 1 à 16 dans lesquels ledit micro-relief présente une hauteur moyenne H compris entre 15 µm et 60 µm.

18. Opercules selon une quelconque des revendications 4 à 17 dans lesquels ladite couche discontinue VEX (50) comprend un agent glissant à une teneur pondérale comprise entre 1 et 30% en poids et de préférence comprise entre 5 et 15% en poids.

19. Opercules selon la revendication 18 dans lesquels ledit agent glissant est de la silice micronisée.

20. Procédé de fabrication de bande pour opercules prédécoupés selon une quelconque des revendications 4 à 19 dans lequel :
a) on approvisionne ledit substrat S en bande ou en feuille (3), ladite laque de thermoscellage (6), ainsi que l'agent gonflant à l'état non expansé (4),
b) on forme une dispersion dudit agent gonflant (4), par exemple un vernis ou une encre, comprenant éventuellement un composé de thermoscellage,
c) on applique, avec un grammage choisi et de manière repérée ou non, ladite dispersion sur ledit substrat ou éventuellement sur ledit substrat préalablement revêtu d'une ou plusieurs autres couches complémentaires, par exemple une couche de thermoscellage TH, une impression I, une couche de vernis de surimpression VSP, de manière à obtenir un film multicouche intermédiaire,
d) on porte éventuellement ledit film multicouche intermédiaire à une température donnée et on le maintient à cette température pendant un temps donné choisis pour réaliser tout ou partie de l'expansion dudit agent gonflant et ainsi obtenir tout ou partie de la hauteur prédéterminée dudit micro-relief, ces conditions de température et de temps permettant notamment le séchage dudit film multicouche intermédiaire.
e) selon le cas, on applique lesdites couches complémentaires ou éventuellement d'autres couches, et le cas échéant, on les sèche dans des conditions de température et de temps qui permettent d'obtenir ladite couche VEX formant ledit micro-relief de hauteur moyenne H prédéterminée, de manière à pouvoir supprimer tout ou partie de l'étape d) précédente.

21. Procédé selon la revendication 20 dans lequel on choisit de préférence un agent gonflant formé d'un agent porogène ou formé de micro-billes de diamètre moyen, à l'état non expansé, inférieur à 10 µm et de pouvoir d'expansion typiquement au moins égal à 2.

22. Procédé selon une quelconque des revendications 20 à 21 dans lequel, pour un substrat donné, et compte tenu des conditions d'expansion dudit agent gonflant, notamment une température et une durée d'expansion, on choisit l'extrait sec de ladite dispersion ainsi que le grammage d'agent gonflant à appliquer de manière à obtenir une hauteur moyenne de micro-relief H comprise entre 10 et 80 µm, et de préférence comprise entre 15 et 60 µm.

23. Procédé selon une quelconque des revendications 20 à 22 dans lequel on choisit la répartition ou distribution dudit agent gonflant de manière à ce que la consommation en agent gonflant soit la plus faible possible, typiquement par un arrangement, régulier ou non, d'aspérités de hauteur H et de surface Sₒ comprise entre 0,1 et 10 mm², distantes entre elles d'une longueur moyenne D_{H} variant en première approximation comme k.(H-H₀) où H₀ représente la hauteur minimum des aspérités pour laquelle apparaît un effet positif desdites aspérités sur la dépilabilité, typiquement de l'ordre de 10 µm, et où k est une constante de proportionnalité de valeur comprise typiquement entre 30 et 300 selon le type d'opercule.

24. Procédé selon une quelconque des revendications 20 à 23 dans lequel on applique ladite dispersion en la projetant à l'état dispersé ou divisé sur ledit substrat, de manière à obtenir un micro-relief à répartition aléatoire (511), typiquement formé par un grand nombre d'aspérités ponctuelles (51) distribuées au hasard.

25. Procédé selon une quelconque des revendications 20 à 24 dans lequel on applique ladite dispersion par tout procédé d'impression ou de reprographie permettant de former un motif prédéterminé (52,54,55,56,57), typiquement choisi parmi les procédés de sérigraphie, offset, flexographie, héliogravure, impression par jet d'encre, par transfert, ou par un procédé de reprographie ou d'impression numérique.

26. Procédé selon une quelconque des revendications 20 à 25 dans lequel on fabrique de la bande pour opercules prédécoupées présentant une des structures suivantes, notées symboliquement, de l'extérieur vers l'intérieur :
1) VSP/ I / Al / TH / VEX , où Al désigne une feuille d'aluminium formant le substrat S
2) VSP / I / PET / TH / VEX, où PET désigne un film de polyester formant le substrat S
3) VEX / VSP / I / Al / TH,
4) VEX / VSP / / PET / TH,
5) VSP/ I / VAc / Al / TH / VEX , où VAc désigne un vernis d'accrochage
6) VEX / VSP / I / VAc / Al / TH,
7) les structures précédentes 1) à 6) avec la couche de vernis de thermoscellage TH repérée par rapport à l'impression I, de manière à avoir une couche TH sur la bande périphérique de scellage et une couche VEX dans la plage centrale délimitée par ladite bande périphérique,
8) les structures 1), 2) et 5) précédentes avec une couche VEX non repérée par rapport à l'impression I, la couche VEX comprenant une laque de thermoscellage, la couche de vernis de thermoscellage TH pouvant être repérée ou non par rapport à l'impression I.
9) les structures 1), 2) et 5) précédentes dans lesquelles les couches TH/VEX sont remplacées par une couche unique TH+VEX.
10) les structures 1) et 2) précédentes dans lesquelles la couche VSP est remplacée par une couche VEX continue ou VEXC, de manière à modifier l'apparence de l'impression I.

27. Utilisation d'un agent gonflant à l'état expansé pour former le micro-relief à la surface d'opercules selon une quelconque des revendications 1 à 19, afin d'améliorer leur dépilabilité et/ou modifier l'aspect de l'impression I.

28. Utilisation selon la revendication 27 dans laquelle ledit agent gonflant est constitué par un agent porogène ou par de micro-billes, respectivement décomposable ou expansibles par un apport énergétique, typiquement un apport de chaleur.

29. Utilisation selon la revendication 28 dans laquelle ledit apport de chaleur est effectué lors d'une étape obligée de la fabrication des opercules, typiquement une étape de séchage d'encres ou de vernis formant une couche des opercules.

## Claims

1. Foil lids (2), pre-cut from a multi-layer film (1) typically in strip form or on a roll, and used to make sealed closures of pots or containers, typically for the packaging of fresh produce, comprising a substrate (3) with a sealing layer, typically formed from a heat sealing lacquer (6), and possibly other layers, in particular an imprint (7) on the outer surface, and comprising a means of producing on at least one of the surfaces a roughness that makes the foil lids able to be destacked, **characterised in that** the said means is comprised of an embossment formed by the said projections (51, 52, 54, 55, 56, 57), the said projections being formed by or comprising a swelling agent in expanded state (5), in order to form the said embossment of average height H of between 10 µm and 80 µm.

2. Foil lids according to claim 1, in which the group of projections forming the said embossment covers a ratio equal to 0.1 to 30 % of the outer surface and/or the inner surface.

3. Foil lids according to claim 2, in which the said ratio is between 1 and 15 %.

4. Foil lids according to any one of the claims 1 to 3, in which the said embossment is comprised of a discontinuous layer VEX (50) of a varnish or an ink comprising the said swelling agent in expanded state (5).

5. Foil lids according to claim 4, in which the projections of the said discontinuous layer VEX (50) typically comprising discrete separate projections (51) and/or lines (52), of width L, and/or flats, evenly or randomly distributed, this group of embossed elements forming an embossed motif.

6. Foil lids according to claim 5 in which the said discontinuous layer VEX (50) is formed either on the inner surface of the said substrate (3), or between the said substrate (3) and the said sealing film (6), or on top of the said sealing film (6) a continuous VEXC layer which could be possibly applied to the outer surface.

7. Foil lids according to claim 5 in which the said discontinuous layer VEX (50) is formed on the said outer surface of the substrate (3), typically on the said imprint (7).

8. Foil lids according to any one of the previous claims 5 to 7 in which the constituents of the said discontinuous layer VEX (50) comprises the said swelling agent in expanded state (5) are selected from a range of materials approved for use with foodstuffs.

9. Foil lids according to any one of the claims 5 to 8, in which the said discontinuous layer VEX (50) forms an irregular motif, the irregularity of the motif being either predetermined or random, and in this case typically comprised of a random group of discrete projections.

10. Foil lids according to any one of the claims 5 to 8 in which :
a) the said discontinuous layer VEX (50) forms an embossed motif, the dimensions of which are typically height H and width L, being selected in order to ensure a visual contrast that allows the said motif to be easily seen, the said motif typically being chosen to constitute an additional differentiation and identification factor for the packaged produce, the said printed motif also including an identification feature, such as an outer decoration, a logo, a mark, an acronym, numbers, letters or a text,
b) the distribution of the said embossed feature is selected, in particular the spacing between two adjacent embossed features, in order to produce a density of the projections that will ensure the said foil lids are able to be destacked.

11. Foil lids according to claim 10 in which the said discontinuous layer VEX (50) comprises a colorant used to produce the said contrast, preferably approved for use with foodstuffs, such as typically, a white pigment if the remaining part of the said foil lid not covered by the said motif is coloured or of a dark tone, or a black pigment if this remaining part is white or light in tone, and in which the said embossed motif providing the said visual contrast is a printed motif (52, 54, 55, 56, 57).

12. Foil lids according to any one of the claims 10 to 11 in which the said printed motif is an identical imprint (55) for all the foil lids or a different imprint (56, 57) from one foil lid to the next, this motif (56, 57) including at least one variable feature from one foil lid to another, in the form of characters, typically numbers, letters, or single symbols, of a size and spacing selected to produce the said adequate density distribution of projections, in order that this means of discrimination of one foil lid with respect to another can be used as a game or lottery, this means of discrimination being located on the outer visible surface of the foil lid, or on the inner surface of the foil lid, and only visible once the said pots or containers have been first opened.

13. Foil lids according to any one of the claims 2 to 12 in which the height H of the said projections (51) or lines (52) or the printed motifs (54, 55, 56, 57), the said ratio, and distribution of the said projections or lines or motifs on the foil lid surfaces are selected in order that the foil lids (2), including the embossment formed by the said projections or the said motifs, are able to be destacked, and form upright stacks, with each foil lid (2) remaining in essentially a horizontal plane.

14. Foil lids according to any one of the claims 1 to 13 in which the said substrate (3) is selected from a range of foil or strip material :
a) aluminium foil of between 5 µm and 100µm thickness
b) plastic film, metallic finish or not in a PET base of between 8 µm and 500 µm thickness,
c) plastic film, typically in PP, OPP, PS, OPS, metallic finish or not, of between 10 µm and 500 µm thickness,
d) multi-layer film comprising at least two layers made from one or several of the preceding materials a) to c), and possibly joined together using a layer of adhesive,
e) multi-layer film comprising a layer of paper and a film from a) to d).

15. Foil lids according to any one of the claims 1 to 14 in which the said layer VEX (50) is formed in an indexed way with respect to the imprint (7), typically outside the peripheral zone (21) of the foil lids that are to be installed.

16. Foil lids according to any one of the claims 1 to 14 in which the said layer VEX (50) comprises a heat sealing lacquer and is formed in a non indexed way with respect to the imprint (7), including in the peripheral sealing zone (21) of the foil lids.

17. Foil lids according to any one of the claims 1 to 16 in which the said embossment has an average height H of between 15 µm and 60 µm.

18. Foil lids according to any one of the claims 4 to 17 in which the said discontinuous layer VEX (50) comprises a slippery substance added at between 1 and 30 % by weight and preferably between 5 and 15 % by weight.

19. Foil lids according to claim 18 in which the said slippery substance is micronised silica.

20. Process for the manufacture of strips used to make pre-cut foil lids according to any one of the claims 1 to 19 in which :
a) the said substrate S in strip or foil (3), the said heat sealing lacquer (6) as well as the swelling agent in unexpanded state (4) are utilised,
b) a coating of the said swelling agent (4) is made typically using a varnish or ink, possibly including an amount of heat sealing material,
c) the said coating is applied using a chosen density, and indexed or not, to the said substrate or possibly to the said substrate already coated with several other additional coatings, typically a heat sealing film TH, an imprint I, a layer of overprinting varnish VSP, in order to produce an intermediate multi-layer film,
d) the said intermediate multi-layer film is possibly raised to a given temperature and maintained there during a predetermined time selected in order to achieve all or partial expansion of the said swelling agent and thus obtain all or part of the predetermined height of the said embossment, these conditions of temperatures and time typically providing the conditions for the drying of the said intermediate multi-layer film,
e) depending upon the case, the said additional or possibly more layers are applied and where necessary, they are dried under conditions of temperature and time that allow the said VEX layer to be produced forming the said embossment of predetermined mean height H, in order to avoid all or part of the previous stage d).

21. Process according to claim 20 in which preferably a swelling agent made from a porous material or micro-spheres of average unexpanded diameter of less than 10 µm and typical expansion ratio of 2 or more is used.

22. Process according to one of the claims 20 to 21 in which, for a given substrate, and accounting for the expansion conditions of the said swelling agent essentially of temperature and time, it is usual to select the dry content of the said coating as well as the weight density of the swelling agent to be applied to produce on average embossment height H of between 10 and 80 µm, and preferably between 15 and 60 µm.

23. Process according to any one of the claims 20 to 22 in which the spread or dispersion of the said swelling agent is selected in order to ensure a minimum consumption of swelling agent, typically using an even or not arrangement of projections of height H and area So between 0.1 and 10 mm², with a spacing between them of average length D_{H} with an approximate variation of k. (H-Hₒ) where Hₒ is the minimum height of the projections for which there is a positive contribution by the projections in terms of ability to be destacked, typically of the order of 10 µm, and where k is a constant of proportionality typically between 30 and 300 depending on the type of foil lid.

24. Process according to any one of the claims 20 to 23 in which the said coating is applied using a single spray of two parts where half is present on the substrate, in order to produce a random embossment (511), typically formed from a large number of randomly distributed discrete projections (51).

25. Process according to any one of claims 20 to 24 in which the said coating is applied by any printing or copying process that allows the generation of a predetermined motif (52, 54, 55, 56, 57), typically selected from one of the processes such as screen printing, offset printing, flexographic printing, gravure printing, ink jet printing, image transfer or a digital printing or copying process.

26. Process according to any one of the claims 20 to 25, in which strips are manufactured for the production of pre-cut foil lids with the following structures, noting that the symbols operate from the outside to the inside:
1) VSP/I/Al/TH/VEX, where A1 designates an aluminium foil forming the substrate S,
2) VSP/I/PET/TH/VEX, where PET designates a polyester film forming the substrate S,
3) VEX/VSP/I/Al/TH,
4) VEX/VSP/I/PET/TH,
5) VSP/I/VA_{C}/Al/TH/VEX, where VA_{C} designates a binding varnish,
6) VEX/VSP/I/VA_{C}/Al/TH,
7) The previous structures 1) to 6) with the heat sealing varnish TH indexed with respect to the imprint I, in order to produce a layer TH on the peripheral sealing band and a VEX layer in the central portion bounded by the said peripheral band,
8) The previous structures 1), 2) and 5) with a VEX layer unindexed with respect to the imprint I, the VEX layer including a heat sealing lacquer, the layer of heat sealing varnish TH being indexed or not with respect to the imprint I,
9) The previous structures 1), 2) and 5) in which the TH/VEX layers are replaced by a single TH+VEX layer,
10) The previous structures 1) and 2) in which the VSP layer is replaced by a continuous VEX or VEXC layer, in order to modify the appearance of the imprint I.

27. Use of a swelling agent in expanded state to produce the embossment on the surface of the foil lids in accordance with any one of the claims 1 to 19, in order to improve their ability to be destacked and/or alter the aspect of the imprint I.

28. Use according to claim 27 in which the said swelling agent is comprised of a porous substance or micro-spheres, that respectively exhibit decomposition or expansion following an input of energy, typically heat.

29. Use according to claim 28 in which the said input of heat is achieved during one of the necessary stages in the manufacture of the foil lids, typically a stage used to dry the inks or varnish present in one of the layers of the foil lid.

## Patentansprüche

1. Verschlussmembranen (2), aus einem Mehrschichtenfilm (1) insbesondere in Form von Streifen oder Band vorgeschnitten und zum dichten Siegelverschluss von Töpfen oder Behältern, insbesondere für die Verpackung von Frischprodukten bestimmt, mit einem Substrat (3) mit einer Siegelschicht, welche beispielsweise aus einem Heißsiegellack (6) besteht, eventuell mit anderen Schichten, insbesondere einem Aufdruck (7) auf seiner Außenseite, und mit einem Mittel, um auf mindestens einer seiner Außenseiten eine zum Abziehen der Verschlussmembranen geeignete Rauheit zu erhalten, **dadurch gekennzeichnet, dass** das Mittel aus einem Mikrorelief aus Rauhigkeiten (51, 52, 54, 55, 56, 57) besteht, wobei die Rauhigkeiten durch ein Quellmittel im expandierten Zustand (5) gebildet werden oder ein solches enthalten, um das Mikrorelief mit der mittleren Höhe H von 10 µm bis 80 µm zu bilden.

2. Verschlussmembranen nach Anspruch 1, bei denen sämtliche das Mikrorelief bildende Rauhigkeiten einen Anteil der Außenseite und/oder der Innenseite von 0,1 bis 30 % bedecken.

3. Verschlussmembranen nach Anspruch 2, bei denen der Anteil 1 bis 15 % beträgt.

4. Verschlussmembranen nach einem der Ansprüche 1 bis 3, bei denen das Mikrorelief aus einer diskontinuierlichen VEX-Schicht (50) eines Lacks oder einer Farbe besteht, die das Quellmittel im expandierten Zustand (5) enthält.

5. Verschlussmembranen nach Anspruch 4, **dadurch gekennzeichnet, dass** die Rauhigkeiten der diskontinuierlichen VEX-Schicht (50) typischerweise isolierte punktförmige Rauhigkeiten (51) und/oder Striche (52) mit der Breite L und/oder Vollflächen aufweisen, die gleichmäßig oder aleatorisch angeordnet sind, wobei diese Anordnung aus Reliefelementen ein Reliefmotiv bildet.

6. Verschlussmembranen nach Anspruch 5, bei denen die diskontinuierliche VEX-Schicht (50) entweder auf der Innenseite des Substrats (3) oder zwischen dem Substrat (3) und der Siegelschicht (6) oder über der Siegelschicht (6) ausgebildet wird, wobei auf der Außenseite eventuell eine kontinuierliche VEXC-Schicht ausgebildet werden kann.

7. Verschlussmembranen nach Anspruch 5, bei denen die diskontinuierliche VEX-Schicht (50) auf der Außenseite des Substrats (3), typischerweise auf dem Aufdruck (7) ausgebildet wird.

8. Verschlussmembranen nach einem der Ansprüche 5 bis 7, bei denen die Bestandteile der diskontinuierlichen VEX-Schicht (50), die das Quellmittel im expandierten Zustand (5) enthält, unter den Produkten gewählt werden, die für den Kontakt mit Nahrungsmitteln zugelassen sind.

9. Verschlussmembranen nach einem der Ansprüche 5 bis 8, bei denen die diskontinuierliche VEX-Schicht (50) ein unregelmäßiges Motiv bildet, wobei die Unregelmäßigkeit des Motivs entweder vorbestimmt oder aleatorisch ist und in diesem Fall typischerweise aus einer aleatorischen Anordnung punktförmiger Rauhigkeiten besteht.

10. Verschlussmembranen nach einem der Ansprüche 5 bis 8, bei denen:
a) die diskontinuierliche VEX-Schicht (50) ein Reliefmotiv bildet, wobei die Dimensionen der Reliefelemente, typischerweise die Höhe H und die Breite L so gewählt werden, dass ein visueller Kontrast gewährleistet wird, der es ermöglicht, das Motiv visuell zu erkennen, das Motiv typischerweise so gewählt wird, dass es ein zusätzliches Element zur Differenzierung und Identifizierung der verpackten Frischprodukte darstellt, und das Druckmotiv ein Identifizierungselement enthalten kann, wie z.B. eine Außenverzierung, ein Logo, eine Marke, ein Sigel, Zahlen, Buchstaben oder Text,
b) die Verteilung der Reliefelemente, insbesondere der Abstand zwischen zwei benachbarten Reliefelementen so gewählt wird, dass sich eine Rauheitendichte ergibt, die die Abziehbarkeit der Verschlussmembranen gewährleistet.

11. Verschlussmembranen nach Anspruch 10, bei denen die diskontinuierliche VEX-Schicht (50) einen den Kontrast gewährleistenden, vorzugsweise für den Nahrungsmittelkontakt zugelassenen Farbstoff aufweist, wie zum Beispiel ein Weißpigment, wenn der restliche Teil der mit dem Motiv bedeckten Verschlussmembrane farbig oder in einem dunklen Farbton ausgestaltet ist, oder ein Schwarzpigment, wenn dieser restliche Teil weiß oder in einem hellen Farbton ausgestaltet ist, und bei denen das den visuellen Kontrast gewährleistende Reliefmotiv ein Druckmotiv (52, 54, 55, 56, 57) ist.

12. Verschlussmembranen nach einem der Ansprüche 10 bis 11, bei denen das Druckmotiv ein für alle Verschlussmembranen gleiches Druckmotiv (55) oder ein von einer Verschlussmembrane zur anderen verschiedenes Druckmotiv (56, 57) ist, wobei dieses Motiv (56, 57) mindestens einen von einer Verschlussmembrane zur anderen variablen Teil in Form von Zeichen, typischerweise spezifischen Zahlen, Buchstaben oder Symbolen aufweist, deren Größe und Abstand so gewählt sind, dass sich die genannte ausreichende Rauheitendichte ergibt, so dass dieses Mittel zur Differenzierung einer Verschlussmembrane in Bezug auf eine andere für ein Spiel oder eine Lotterie verwendet werden kann, wobei sich dieses Differenzierungsmittel auf der Außenseite der Verschlussmembrane - sichtbar - oder auf der Innenseite der Verschlussmembrane befinden kann und dann nur beim ersten Öffnen der Töpfe oder Behälter sichtbar ist.

13. Verschlussmembranen nach einem der Ansprüche 2 bis 12, bei denen die Höhe H der Rauheiten (51) oder der Striche (52) oder der Druckmotive (54, 55, 56, 57), der Anteil und die Verteilung der Rauhigkeiten oder Striche oder Motive an der Oberfläche der Verschlussmembranen so gewählt sind, dass die Verschlussmembranen (2) angesichts des durch die Rauhigkeiten und Motive gebildeten Mikroreliefs abziehbar sind und gerade Stapel bilden, wobei jede Verschlussmembrane (2) in einer weitgehend horizontalen Ebene verbleibt.

14. Verschlussmembranen nach einem der Ansprüche 1 bis 13, bei denen das Substrat (3) unter folgendem Folien- oder Bandmaterial gewählt wird:
a) Aluminiumfolie mit einer Dicke von 5 µm bis 100 µm,
b) Plastikfilm auf PET-Basis, metallisiert oder nicht, mit einer Dicke von 8 µm bis 500 µm,
c) Plastikfilm, typischerweise PP, OPP, PS, OPS, metallisiert oder nicht, mit einer Dicke von 10 µm bis 500 µm,
d) Mehrschichtenfilm mit mindestens zwei Schichten aus einem oder mehreren der vorstehenden Werkstoffe a) bis c), welche Schichten eventuell durch eine Klebschicht miteinander verbunden sind,
e) Mehrschichtenfilm mit einer Papierschicht und einem vorstehenden Film a) bis d).

15. Verschlussmembranen nach einem der Ansprüche 4 bis 14, bei denen die VEX-Schicht (50) in Bezug auf den Aufdruck (7) örtlich präzise festgelegt ausgebildet ist, typischerweise außerhalb der zu siegelnden Randzone (21) der Verschlussmembranen.

16. Verschlussmembranen nach einem der Ansprüche 4 bis 14, bei denen die VEX-Schicht (50) einen Heißsiegellack aufweist und in Bezug auf den Aufdruck (7) örtlich nicht präzise festgelegt ausgebildet ist, inkl. in der zu siegelnden Randzone (21) der Verschlussmembranen.

17. Verschlussmembranen nach einem der Ansprüche 1 bis 16, bei denen das Mikrorelief eine mittlere Höhe H von 15 µm bis 60 µm aufweist.

18. Verschlussmembranen nach einem der Ansprüche 4 bis 17, bei denen die diskontinuierliche VEX-Schicht (50) ein Gleitmittel mit einem Gewichtsgehalt von 1 bis 30 Gew.-% und vorzugsweise 5 bis 15 Gew.-% aufweist.

19. Verschlussmembranen nach Anspruch 18, bei denen das Gleitmittel mikronisierte Kieselsäure ist.

20. Verfahren zur Herstellung von Bandmaterial für vorgeschnittene Verschlussmembranen nach einem der Ansprüche 4 bis 18, bei dem:
a) das Substrat S in Form von Band oder Folie (3), der Heißsiegellack (6) sowie das Quellmittel im nicht expandierten Zustand (4) bereitgestellt werden,
b) eine Dispersion des Quellmittels gebildet wird, zum Beispiel ein Lack oder eine Farbe, die eventuell eine Heißsiegelverbindung aufweist,
c) die Dispersion mit einem gewählten Flächengewicht örtlich präzise festgelegt oder nicht auf das Substrat oder eventuell auf das vorher mit einer oder mehreren anderen zusätzlichen Schichten, zum Beispiel einer Heißsiegelschicht TH, einem Aufdruck I, einer Überdrucklackschicht VSP versehene Substrat aufgetragen wird, um einen mehrschichtigen Zwischenfilm zu erhalten,
d) der mehrschichtige Zwischenfilm eventuell auf eine gegebene Temperatur erwärmt und auf dieser Temperatur während einer gegebenen Zeit gehalten wird, welche Temperatur und Zeit so gewählt werden, dass die Expansion des Quellmittels ganz oder teilweise erfolgt und so die vorbestimmte Höhe des Mikroreliefs ganz oder teilweise erreicht wird, wobei diese Temperatur- und Zeitbedingungen insbesondere das Trocknen des mehrschichtigen Zwischenfilms ermöglichen.
e) je nach Fall die zusätzlichen Schichten oder eventuell weitere Schichten aufgebracht und gegebenenfalls unter Temperatur- und Zeitbedingungen, die es ermöglichen, die das Mikrorelief mit der vorbestimmten mittleren Höhe H bildende VEX-Schicht zu erhalten, getrocknet werden, um auf den vorstehenden Schritt d) ganz oder zum Teil verzichten zu können.

21. Verfahren nach Anspruch 20, bei dem vorzugsweise ein Quellmittel gewählt wird, das aus einem Porenbildner oder aus Mikrokügelchen besteht, deren mittlerer Durchmesser im nicht expandierten Zustand kleiner als 10 µm ist und die ein Expansionsvermögen haben, das typischerweise mindestens gleich 2 ist.

22. Verfahren nach einem der Ansprüche 20 bis 21, bei dem für ein gegebenes Substrat und angesichts der Expansionsbedingungen des Quellmittels, insbesondere Expansionstemperatur und -zeit, der Trockenextrakt der Dispersion sowie das Flächengewicht des aufzubringenden Quellmittels so gewählt werden, dass eine mittlere Mikrorelief-Höhe H von 10 bis 80 µm und vorzugsweise 15 bis 60 µm erzielt wird.

23. Verfahren nach einem der Ansprüche 20 bis 22, bei dem die Verteilung oder Aufgabe des Quellmittels so gewählt wird, dass der Quellmittelverbrauch so gering wie möglich ist, insbesondere durch eine regelmäßige oder unregelmäßige Verteilung der Rauhigkeiten mit der Höhe H und der Fläche Sₒ von 0,1 bis 10 mm², die voneinander bestandet sind um eine mittlere Länge D_{H}, variabel in erster Annäherung wie k.(H-H₀), wo H₀ die Mindesthöhe der Rauhigkeiten darstellt, bei der eine positive Wirkung der Rauhigkeiten auf die Abziehbarkeit auftritt, typischerweise etwa 10 µm, und k eine Proportionalitätskonstante ist, deren Wert typischerweise zwischen 30 und 300 je nach Art der Verschlussmembrane liegt.

24. Verfahren nach einem der Ansprüche 20 bis 23, bei dem die Dispersion durch Aufspritzen im dispergierten oder geteilten Zustand auf das Substrat aufgetragen wird, um ein aleatorisch verteiltes Mikrorelief (511) zu erhalten, das typischerweise aus einer Vielzahl zufällig verteilter, punktförmiger Rauhigkeiten (51) besteht.

25. Verfahren nach einem der Ansprüche 20 bis 24, bei dem die Dispersion mit einem beliebigen Druck- oder Reprographieverfahren aufgetragen wird, welches die Bildung eines vorbestimmten Motivs (52, 54, 55, 56, 57) ermöglicht und typischerweise unter den Verfahren Serigraphie, Offset, Flexographie, Heliogravüre, Tintenstrahldruck, Transferdruck, digitale Reprographie oder Digitaldruck gewählt wird.

26. Verfahren nach einem der Ansprüche 20 bis 25, bei dem Bandmaterial für vorgeschnittene Verschlussmembranen hergestellt wird, das eine der folgenden, symbolisch von außen nach innen wie folgt bezeichneten Strukturen aufweist:
1) VSP / I / Al / TH / VEX, wo Al eine das Substrat S bildende Aluminiumfolie bezeichnet.
2) VSP / I / PET / TH / VEX, wo PET einen das Substrat S bildenden Polyesterfilm bezeichnet.
3) VEX / VSP / I / Al / TH,
4) VEX / VSP / I / PET / TH,
5) VSP / I / VAc / Al / TH / VEX, wo VAc einen Haftlack bezeichnet,
6) VEX / VSP / I / VAc / Al / TH,
7) die vorstehenden Strukturen 1) bis 6) mit der in Bezug auf den Aufdruck I örtlich präzise festgelegten Heißsiegellackschicht TH, um eine TH-Schicht auf dem zu siegelnden Randstreifen und eine VEX-Schicht im mittigen Bereich zu erhalten, der durch diesen Randstreifen begrenzt ist,
8) die vorstehenden Strukturen 1), 2) und 5) mit einer in Bezug auf den Aufdruck I örtlich nicht präzise festgelegten VEX-Schicht, wobei die VEX-Schicht einen Heißsiegellack aufweist und die Heißsiegellackschicht TH in Bezug auf den Aufdruck I örtlich präzise festgelegt sein kann oder nicht,
9) die vorstehenden Strukturen 1), 2) und 5), bei denen die THNEX-Schichten durch eine einzige TH+VEX-Schicht ersetzt werden,
10) die vorstehenden Strukturen 1) und 2), bei denen die VSP-Schicht durch eine kontinuierliche VEX- oder VEXC-Schicht ersetzt wird, um das Bild des Aufdrucks I zu modifizieren.

27. Verwendung eines Quellmittels im expandierten Zustand zur Bildung des Mikroreliefs an der Oberfläche der Verschlussmembranen nach einem der Ansprüche 1 bis 19, um die Abziehbarkeit zu verbessern und/oder das Bild des Aufdrucks zu modifizieren.

28. Verwendung nach Anspruch 27, bei der das Quellmittel aus einem Porenbildner oder aus Mikrokügelchen besteht, die durch Energiezufuhr, typischerweise Wärmezufuhr zersetzbar bzw. expansionsfähig sind.

29. Verwendung nach Anspruch 28, bei der die Wärmezufuhr in einem obligatorischen Schritt bei der Herstellung der Verschlussmembranen erfolgt, typischerweise einem Schritt, bei dem die Farben oder Lacke, die eine Schicht der Verschlussmembranen bilden, getrocknet werden.
